# EUROPÄISCHE PATENTSCHRIFT

(11) **EP 2 943 727 B1**
(45) Veröffentlichungstag und Bekanntmachung des Hinweises auf die Patenterteilung: **10.03.2021**
(21) Anmeldenummer: 14700980.7
(22) Anmeldetag: 14.01.2014
(51) Int. Cl.: F24F 3/044, F24F 11/00, F24F 11/30, F24F 11/76, F24F 11/77, F24F 11/83, F24F 110/10, F24F 110/20, F24F 11/81

(54) **MEHRKANAL-KLIMAANLAGE**
MULTI-DUCT AIR CONDITIONING SYSTEM
CLIMATISEUR MULTI-SPLIT

(30) Priorität: 14.01.2013 DE 102013100330
(43) Veröffentlichungstag der Anmeldung: 18.11.2015
(73) Patentinhaber: Robert Bosch GmbH, 70442 Stuttgart (DE)
(72) Erfinder: BAUER, Albert, 80939 Muenchen (DE)
(86) Internationale Anmeldenummer: PCT/EP2014/050553
(87) Internationale Veröffentlichungsnummer: WO 2014/108552

(56) Entgegenhaltungen:
- EP-A1- 0 821 204
- WO-A1-03/046445
- DE-A1- 3 307 116
- DE-B3-102008 010 656
- GB-A- 1 516 209
- JP-A- H02 115 648
- US-A1- 2003 085 033

## Beschreibung

Die Erfindung betrifft eine Mehrkanal-Klimaanlage gemäß der im Oberbegriff des Anspruches 1 angegebenen Art, sowie ein Verfahren zum Betreiben dieser Anlage.

Aus der DE 10 2008 010 656 B3 ist eine Zweikanal-Anlage bekannt, welche einen Zuluftventilator aufweist. Dieser Zuluftventilator transportiert in der Regel Umluft und/oder Frischluft in das Zweikanalsystem. Ein Heizregister ist dem Zuluftventilator nachgeschaltet. Nach dem Heizregister teilt sich der Zuluftkanal in zwei Zuluftkanäle auf, in die Klappeneinrichtungen in Form von Steuerklappen eingebracht sind. Hierrüber werden die Luftmengen für die jeweiligen Zuluftkanäle eingestellt. Von den Zuluftkanälen führen Verzweigungskanäle zu den zu klimatisierenden Räumen oder Raumzonen. Den zu klimatisierenden Räumen bzw. Raumzonen vorgeschaltet sind weitere Klappen zur Steuerung der Luftmenge aus dem jeweiligen Zuluftkanal für den zu klimatisierenden Raum bzw. die zu klimatisierende Raumzone. Dem Zuluftventilator ist ein Ansaugkanal vorgeschaltet, der mit einem Frischluftkanal und einen Umluftkanal verbunden sein kann.

Die bekannte Zweikanal-Anlage hat den Nachteil, dass lediglich ein Zuluftventilator vorgesehen ist. Hierdurch wird bei Ausfall dieses Zuluftventilators die gesamte Anlage stillgesetzt, da keine Frischluft und/oder Umluft den Zuluftkanälen mehr aktiv zugeführt werden kann. Des Weiteren können durch die in die Zuluftkanäle eingebrachten Klappen nach der Aufteilung in die beiden Zuluftkanäle Druckverluste auftreten. Hierdurch geht Energie verloren, was den Wirkungsgrad der Zweikanal-Klimaanlage beeinträchtigt.

Bei der bekannten Zweikanal-Klimaanlage kann dem Zuluftventilator Frischluft, aber auch Umluft zugeführt werden. Der Umluftanteil ist abhängig von der Luftqualität der Umluft und der Luftqualität in dem zu klimatisierenden Raum bzw. der zu klimatisierenden Raumzone, dem Energieinhalt der Umluft und dem Energiebedarf in den zu klimatisierenden Räumen bzw. Raumzonen. Die Bedingungen und Anforderungen können aber für die zu klimatisierenden Räume bzw. Raumzonen ganz unterschiedlich sein, so dass sich bezogen auf die zu klimatisierenden Räume bzw. Raumzonen ein unterschiedlicher Umluftbedarf ergeben kann. Diesem unterschiedlichen Umluftbedarf kann die bekannte Zweikanal-Klimaanlage nicht gerecht werden, da dafür die Zweikanal-Klimaanlage nicht flexibel genug ausgestaltet ist, insbesondere um den unterschiedlichen Energiebedarf in Verbindung mit den unterschiedlichen Luftqualitätsanforderungen bezogen auf die Zuluftkanäle decken zu können.

Beispielsweise kann folgende Situation gegeben sein: Die bekannte Zweikanal-Klimaanlage klimatisiert mehrere Räume. Im Winterbetrieb ist der Bedarf in allen Räumen für Beheizung gegeben, so dass in einem Zuluftkanal Warmluft mit einer bestimmten Temperatur zugeführt wird. Entsprechend dem Energiebedarf der Räume wird die Luftmenge nur aus einem Zuluftkanal benötigt. Zuluft aus dem anderen Kanal wird nicht benötigt. In einem Raum sinkt die Luftqualität ab, so dass in diesem Raum der Frischluft-Bedarf steigt. Dies hat bei der bekannten Zweikanal-Klimaanlage die Folge, dass der Umluftanteil erheblich sinkt und der Frischluftanteil steigt. Der Frischluftanteil richtet sich dabei nach den Zielvorgaben des Raumes mit der schlechtesten Luftqualität. Somit werden alle Räume mit einem höheren Frischluftanteil als notwendig versorgt. Dies führt zu erheblichen Energieverlusten.

Aus der US 2003/0085033 A1 ist eine Zweikanal-Klimaanlage bekannt, die zwei klimatisierte Luftquellen verwendet, um Luft in zwei Hauptkanalsysteme zu liefern.

Der Erfindung liegt daher die Aufgabe zugrunde, eine Mehrkanal-Klimaanlage gemäß der im Oberbegriff des Anspruches 1 angegebenen Art derart weiterzubilden, dass die genannten Nachteile vermieden werden und eine mehr zielgerichtete Regelung der Mehrkananal-Klimaanlage ermöglicht wird.

Diese Aufgabe wird durch die kennzeichnenden Merkmale der Anspruches 1 in Verbindung mit seinen Oberbegriffsmerkmalen gelöst.

Der Erfindung liegt die Erkenntnis zugrunde, dass durch Vorsehen eines Zuluftventilators in zumindest zwei Zuluftkanälen der gattungsgemäßen Mehrkanal-Klimaanlage zum einen die Ausfallsicherheit erhöht wird, und auch Energie eingespart werden kann, da sich eine größere Flexibilität bei der Steuerung und Regelung bei der Zuführung von unterschiedliche Parameter oder Luftqualitäten aufweisenden Zuluft ergibt.

Nach der Erfindung sind daher mindestens zwei Zuluftventilatoren vorgesehen, wobei in unterschiedlichen Zuluftkanälen jeweils mindestens ein Zuluftventilator angeordnet ist. Auf einfache Weise kann dadurch eine höhere Ausfallsicherheit der Mehrkanal-Klimaanlage gewährleistet und eine Energieeinsparung erreicht werden.

Die Flexibilität und Effektivität der Regelung kann vorzugsweise weiter erhöht werden, wenn in jedem Zuluftkanal ein Zuluftventilator eingebracht ist. Über den Zuluftventilator kann zum einen die Zuluftmenge pro Zuluftkanal individuell gesteuert werden, zudem ist damit die größte Ausfallsicherheit gegeben.

Die Flexibilität der Anlage wird auch dadurch erhöht, dass die Zuluftkanäle über einen Bypasskanal miteinander verbunden sind, wobei in dem Bypasskanal eine Bypassklappe eingebracht ist. Beispielsweise ist es bei Ausfall eines Zuluftventilators möglich, die Zuluft aus dem über den Bypasskanal verbundenen weiteren Zuluftkanal zuzuführen, um so die Ausfallsicherheit zu gewährleisten.

Die Bypassklappe kann dabei mit der Steuereinheit zusammenwirken.

Gemäß einer Ausführungsform der Erfindung ist ein Ansaugkanal mit einem angeschlossenen Umluftkanal und/oder Frischluftkanal vorgesehen. Der Zuluftkanal wird vor dem Zuluftventilator als Ansaugkanal bezeichnet. Hierrüber wird den Zuluftventilatoren Umluft und/oder Frischluft zugeführt. Die Zuluft für die zu klimatisierenden Räume oder Raumzonen kann somit aus Umluft und/oder Frischluft gebildet werden.

Insbesondere steuert die Steuereinheit die Drehzahl aller Zuluftventilatoren und somit die zu fördernde Luftmenge in den jeweiligen Zuluftkanälen.

Vorzugsweise ist zumindest jeweils eine jedem Zuluftkanal zugeordnete Klappe vorgesehen, wobei durch die von der Steuereinrichtung eingestellte Klappe die anteilige Zuluft aus den jeweiligen Zuluftkanälen zu dem zu klimatisierenden Raum oder zu der Raumzone festlegt ist.

Jeder Zuluftventilator kann an einen Ansaugkanal angeschlossen sein, der mit einem Umluftkanal und/oder einem Frischluftkanal verbunden ist.

Gemäß einer Ausführungsform der Erfindung ist vorzugsweise eines oder mehrere der folgenden Merkmale a) bis c) erfüllt:
a) in den Frischluftkanal ist zumindest eine Frischluftklappe eingebracht, insbesondere regelt die Steuereinheit die Frischluftklappe.
b) eine Umluftklappe ist in den Umluftkanal eingebracht, insbesondere regelt die Steuereinheit die Umluftklappe, um den Umluftanteil der Zuluft festzulegen.
c) ein Fortluftkanal ist vorgesehen und eine Fortluftklappe ist in den Fortluftkanal eingebracht, insbesondere regelt die Steuereinheit die Fortluftklappe, um den Fortluftanteil der Abluft festzulegen.

Die Steuereinheit kann mit in den Räumen, Raumzonen und/oder Zuluft und/oder Abluftkanälen eingebrachten Klimasensoren zusammenwirken, nämlich Sensoren für Temperatur, Feuchte, Luftqualität, Dichte, Druck.

Vorzugsweise ist der Anteil der Umluft und/oder der Frischluft an der Zuluft zum Zuluftventilator des jeweiligen Zuluftkanals in Abhängigkeit von zumindest einem Parameter aus der Gruppe der folgenden Parameter durch die Steuereinheit festgelegt: Temperatur, Feuchte, Luftqualität, Dichte, Druck. Die Klimasensoren können dabei in den zu klimatisierenden Räumen oder den Raumzonen, im Abluftkanal, im Fortluftkanal, im Frischluftkanal, im Umluftkanal und/oder im Zuluftkanal angeordnet sein, also insgesamt Kompartimenten. Die Klimasensoren können dabei folgende Messwerte/Istwerte erfassen: Temperatur, Feuchte, Luftqualität, Dichte, Druck. Diese werden mit den in der Steuereinheit hinterlegten Sollwerten verglichen und bewertet, woraus sich Steuerparameter ergeben, denen Steuersignale für die Aktuatoren der Klimaanlage zugordnet sind, auch Steuersignale für die Zuluftventilatoren.

Insbesondere regelt die Steuereinheit die Drehzahl der Zuluftventilatoren in Abhängigkeit der Anforderungen an Zuluft, entsprechend den Zuluftanteilen, die auf Parametern der Klimasensoren basieren, zu den jeweiligen Räumen oder Raumzonen.

Vorzugsweise umfasst zumindest ein Zuluftkanal zumindest eine Komponente aus der folgenden Gruppe der Luftaufbereitungseinheiten: Kühlregister, Heizregister, Befeuchter, Entfeuchter, Luftfilter, Aromatisierer, Ionisatoren,etc.

Gemäß einem weiteren Aspekt der Erfindung betrifft diese ein Verfahren zum Betreiben einer Mehrkanalanlage gemäß Anspruch 12. Dabei sind folgende Verfahrensschritte vorgesehen:
a) über die Klimasensoren, wie Drucksensor, Temperatursensor, Feuchtigkeitssensor, ein Sensor für die Luftqualität u. ä., wird der Istzustand in den jeweiligen Kompartimenten, wie Kanäle, Räumen und Raumzonen erfasst und mit den in der Steuereinrichtung hinterlegten Sollwerten verglichen und bewertet, woraus sich Steuerparameter ergeben;
b) in Abhängigkeit der Steuerparameter werden die Drehzahl der Zuluftventilatoren und die Klappenstellungen der den Zuluftkanälen jeweils zugeordneten Klappen von der Steuereinheit festgelegt, wodurch sich die anteilsmäßige Zuordnung der Zuluftmenge aus den jeweiligen Zuluftkanälen zu den zu klimatisierenden Räumen oder den Raumzonen ergibt.

Insbesondere kann folgender Verfahrensschritt durchgeführt werden:
c) in Abhängigkeit der Steuerparameter wird die Zuluft aufbereitet.

Vorzugweise wird folgender Verfahrensschritt durchgeführt:
d) in Abhängigkeit der Steuerparameter erfolgt die Verteilung der Luftmenge der Zuluft zu den zu klimatisierenden Räumen und/oder zu den Raumzonen

Gemäß einem weiteren Aspekt wird folgender Verfahrensschritt durchgeführt.
e) in Abhängigkeit der Steuerparameter werden der Abluftmotor, die Abluftklappe und/oder die Fortluftklappe sowie Überstromklappen geregelt.

Vorzugsweise wird folgender Verfahrensschritt durchgeführt, um den Energieinhalt der Abluft zu berücksichtigen:
f) die Einstellung des Umluftanteils und/oder Frischluftanteils erfolgt in Abhängigkeit der Steuerparameter.

Insbesondere erfolgt die Aufbereitung der Luft nach den physikalischen Kennwerten in Abhängigkeit der Steuerparameter.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in den Zeichnungen werden die in der unten aufgeführten Liste der Bezugzeichen verwendeten Begriffe und zugeordneten Bezugzeichen verwendet. In der Zeichnung bedeutet:
- Fig. 1: ein Blockschaltbild einer Zweikanal-Klimaanlage nach der Erfindung, und
- Fig. 2: eine Prinzipdarstellung der Steuereinheit mit den verbundenen Aktuatoren und Klimasensoren.

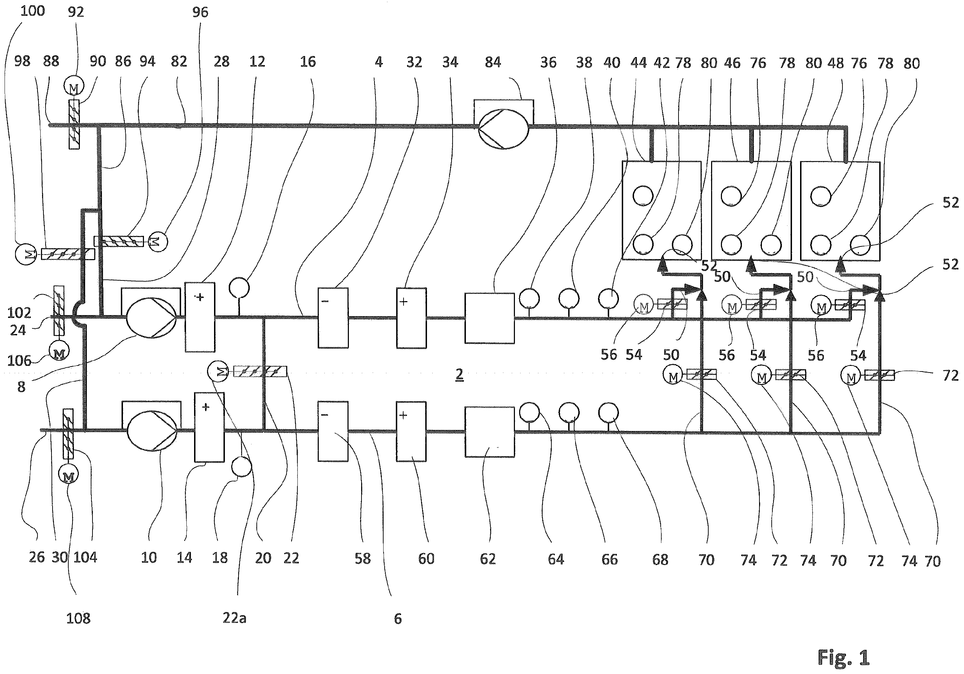

In Fig. 1 ist ein Blockschaltbild einer Zweikanal-Klimaanlage 2 nach der Erfindung dargestellt. Die Zweikanal-Klimaanlage 2 weist zwei Zuluftkanäle 4, 6 auf. In jedem Zuluftkanal 4, 6 ist ein Zuluftventilator 8, 10 sowie ein dem jeweiligen Zuluftventilator 8, 10 nachgeschaltetes Heizregister 12, 14 eingebracht. Dem Heizregister 12, 14 ist jeweils ein Temperaturfühler 16, 18 nachgeschaltet. Nach dem Temperaturfühler 16, 18 ist ein die beiden Zuluftkanäle 4, 6 verbindender Bypasskanal 20 vorgesehen. In den Bypasskanal 20 ist eine Bypassklappe 22 eingebracht, die von einem Bypassklappenmotor 22a betätigt wird.

Jeder Zuluftkanal 4, 6 ist an einen Frischluftkanal 24, 26 und einen Umluftkanal 28, 30 angeschlossen, Vor dem Zuluftventilator 8, 10 wird der Zuluftkanal 4, 6 auch als Ansaugkanal bezeichnet

Nach dem Temperaturfühler 16 und dem Bypasskanal 20 im ersten Zuluftkanal 4 ist zunächst ein Kühlregister 32, dann ein Heizregister 34 und schließlich eine Befeuchtungseinrichtung 36 nachgeordnet. Schließlich sind in den ersten Zuluftkanal 4 nach der Befeuchtungseinrichtung 36 noch ein Temperaturfühler 38, ein Feuchtigkeitsfühler 40 sowie ein Druckfühler 42 eingebracht. Der erste Zuluftkanal 4 ist mit Räumen 44, 46 und 48 jeweils verbindbar. Hierfür ist jeweils ein Verzweigungskanal 50 vorgesehen, der mit einem Lufteinlass 52 für den jeweiligen Raum 44, 46, 48 verbunden ist. Der Verzweigungskanal 50 ist Teil des ersten Zuluftkanals 4. In diesen Verzweigungskanal 50 ist eine Klappe 54 eingebracht, welche über einen Motor 56 betätigt wird.

In gleicher Weise wie der erste Zuluftkanal 4 ist auch der zweite Zuluftkanal 6 aufgebaut. Nach dem Temperaturfühler 18 und dem Bypasskanal 20 sind ein Kühlregister 58, ein Heizregister 60 sowie eine Befeuchtungseinrichtung 62 nachgeschaltet. An die Befeuchtungseinrichtung 62 schließt sich ein Temperaturfühler 64, ein Feuchtefühler 66 sowie ein Druckfühler 68 an.

Von dem zweiten Zuluftkanal 6 geht jeweils ein zweiter Verzweigungskanal 70 ab, der mit dem Lufteinlass 52 der jeweiligen Räume 44, 46, 48 verbunden ist. In den zweiten Verzweigungskanal 70 ist eine Klappe 72 eingebracht, die von einem Motor 74 betätigt wird.

In den Räumen 44, 46, 48 sind jeweils ein Temperaturfühler 76, ein Feuchtefühler 78 sowie ein Luftqualitätsfühler 80 vorgesehen. Über die einzelnen Fühler wird die Temperatur, die Feuchte und die Luftqualität im Raum 44, 46, 48 erfasst und geregelt. In dem Regelkreis ist für den jeweiligen Raum ein entsprechender Sollwert vorgegeben. Dabei wird das Kühlregister 32, 58, das Heizregister 34, 60, und die Befeuchtungseinrichtung 36, 62 in dem jeweiligen Zuluftkanal 20, 22 nur aktiviert, wenn bedarfsweise die Temperatur zum Kühlen oder Heizen des zu klimatisierenden Raumes 44, 46, 48 oder der Grad zur Befeuchtung in zumindest einem der Zuluftkanäle 4, 6 nicht ausreicht. In der Regel ist der Lufteinlass 52 in dem zu klimatisierenden Raum 44, 46, 48 nur mit einem Zuluftkanal 4 oder 6 verbunden. Somit wird die Luft nicht mehr gemischt sondern entweder dem ersten Zuluftkanal 4 oder dem zweiten Zuluftkanal 6 entnommen.

Über die Klappen 54 und 72 wird die in den Räumen bzw. Raumzonen jeweils benötigte Luftmenge eingestellt. Die Zuluftmenge für die jeweils zu klimatisierenden Räume 44, 46, 48 variiert in Abhängigkeit von den in der Steuereinheit erfassten Messwerten der Sensoren und deren Bewertung und den daraus sich ergebenden Steuerparametern.

Der Druck in den Zuluftkanälen 4, 6 wird in Abhängigkeit von der benötigten Luftmenge in den zu klimatisierenden Räumen 44, 46, 48 über die Zuluftventilatoren 8, 10 geregelt.

Die Kühlregister 32, 58, die Heizregister 34, 60 sowie die Befeuchtungseinrichtung 36, 62 sind nur aktiviert, wenn in den jeweiligen Zuluftkanälen 20, 22 die Temperatur und/oder die Dichtewerte und/oder die Feuchtewerte nicht den Vorgaben entsprechen.

Die Kühlregister 32, 58 sowie die Heizregister 12, 14, 34 und 60 sind über einen vorbestimmten Temperaturbereich einstellbar.

Die Klappen 54 und 72 sind so ausgebildet, dass je nach Anforderung auch nur einer der Zuluftkanäle 4, 6 mit dem Lufteinlass 52 in den klimatisierenden Räumen 44, 46, 48 verbunden werden kann. Über die Klappen 54 und 72 wird zudem die Luftmenge aus dem jeweiligen Zuluftkanal 4, 6 unabhängig voneinander gesteuert.

Über einen Abluftkanal 82 wird die Abluft aus den Räumen 44, 46, 48 gefördert. Hierfür ist ein Abluftventilator 84 in den Abluftkanal 82 eingebracht. Von dem Abluftkanal 82 zweigt ein Umluftkanal 86 ab, der sich in die Umluftkanäle 28 und 30 verzweigt. Der Abzweigung des Umluftkanals 86 von dem Abluftkanal 82 ist der Fortluftkanal 88 nachgeschaltet.

In den Fortluftkanal 88 ist eine Fortluftklappe 90 eingebracht, welche von einem Fortluftklappenmotor 92 betätigt wird. Des Weiteren ist in den Umluftkanal 28 eine Umluftklappe 94 eingebracht, die von dem Umluftklappenmotor 96 betätigt wird. In gleicherweise ist in den Umluftkanal 30 eine Umluftklappe 98 eingebracht, welche von einem Umluftklappenmotor 100 betätigt wird.

In den Frischluftkanal 24 ist eine Frischluftklappe 102 und in den Frischluftkanal 26 eine Frischluftklappe 104 eingebracht. Die Frischluftklappe 102 wird durch einen Frischluftklappenmotor 106 und die Frischluftklappe 104 durch einen Frischluftklappenmotor 108 betätigt.

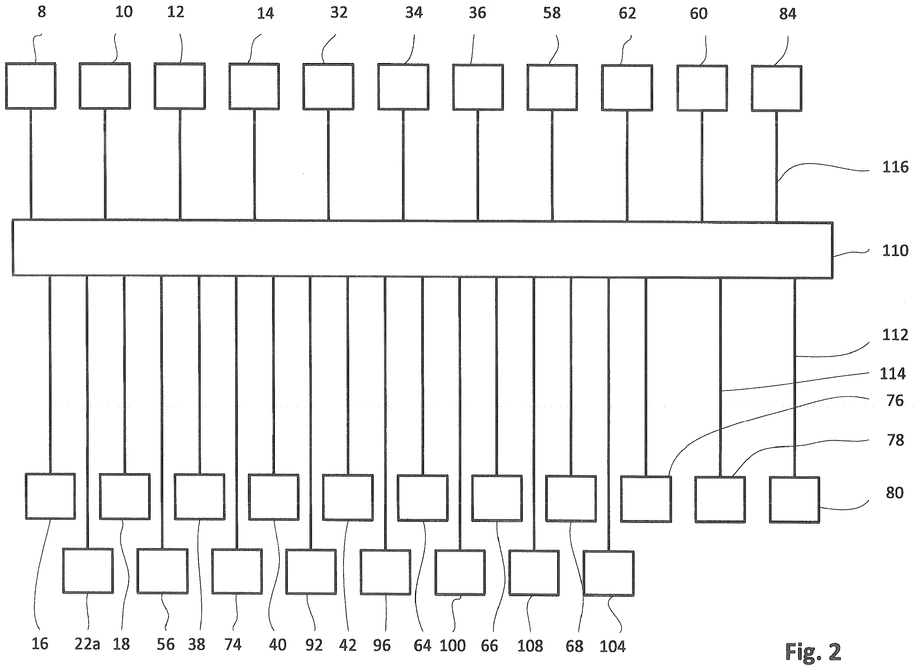

In Fig.2 ist in einer schematischen Prinzipdarstellung eine Steuereinheit 110 der Zweikanal-Klimaanlage 2 von Fig. 1 dargestellt. Die Steuereinheit 110 ist über Signalleitungen 112 mit den Klimasensoren verbunden, also mit dem Temperaturfühler 16, dem Temperaturfühler 18, dem Temperaturfühler 38, dem Feuchtigkeitsfühler 40, dem Druckfühler 42,Temperaturfühler 64, dem Feuchtigkeitsfühler 66, dem Druckfühler 68, dem Temperaturfühler 76, dem Feuchtigkeitsfühler 78, und dem Luftqualitätsfühler 80.

Des Weiteren ist die Steuereinheit 110 über Signalleitungen 114 mit den Motoren der einzelnen Klappen verbunden, also mit dem Bypassklappenmotor 22a, dem Motor für die Klappe im ersten Verzweigungskanal 56, dem Motor für die Klappe im zweiten Verzweigungskanal 74, dem Fortluftklappenmotor 92, dem Umluftklappenmotor 96, dem Umluftklappenmotor 100, dem Frischluftklappenmotor108, und dem Frischluftklappenmotor 104.

Die Steuereinheit 110 ist über Signalleitungen 116 mit den Ventilatoren und den Luftaufbereitungseinheiten verbunden, also mit dem Zuluftventilator 8, dem Zuluftventilator 10, dem Abluftventilator 84, dem Heizregister12, dem Heizregister 14, dem Kühlregister 32, Heizregister 34, Befeuchtungseinrichtung 36, Kühlregister 58, Befeuchtungseinrichtung 62, und dem Heizregister 60 sowie fakultativen, in der Zeichnung nicht dargestellten Luftqualitätsverbesserungen, wie Aromatisierern, Ionisatoren etc.

Die Steuereinheit 110 regelt dabei die Zweikanal-Klimaanlage in folgenden Verfahrensschritten.
a) Über die Klimasensoren 16, 18, 38, 40, 42, 64, 66, 68, 76, 78, 80 wird der Istzustand in den jeweils zugeordneten Kompartimenten - also Kanäle, Räume, Raumzonen etc. - erfasst und mit den in der Steuereinrichtung 110 hinterlegten Sollwerten verglichen und bewertet, woraus sich zugeordnete Steuerparameter ergeben.
b) In Abhängigkeit der Steuerparameter erfolgt die Einstellung des Frischluftanteils und/oder Umluftanteils über die Stellung der Umluftklappe 94, 98 sowie der Frischluftklappe 102 und 104 und ggfs. auch der Fortluftklappe 90. Hierfür erhalten die Motoren 92, 96, 100, 106, 108 entsprechende Stellsignale von der Steuereinheit 110.
c) In Abhängigkeit der Steuerparameter wird die Zuluft aufbereitet. Je nach Anforderung erfolgt ein Kühlen durch die Kühlregister 32, 58, ein Heizen über die Heizregister 12, 14, 34, 60, ein Befeuchten durch den Befeuchter 36, 62 und ein Entfeuchten durch das Zusammenwirken von Kühlregister 32, 58 und Heizregister 34 60.
d) In Abhängigkeit der Steuerparameter werden die Drehzahl der Zuluftventilatoren 8, 10 und die Klappenstellungen der den Zuluftkanälen 4, 6 jeweils zugeordneten Klappen 54,72 von der Steuereinheit 110 festgelegt, wodurch sich die anteilsmäßige Zuordnung der Zuluftmenge aus den jeweiligen Zuluftkanälen 4, 6 ergibt. Hierfür erhalten die Motoren 56,74 entsprechende Stellsignale von der Steuereinrichtung 110.
e) In Abhängigkeit der Steuerparameter wird der Abluftmotor 84 und die Fortluftklappe 92 geregelt. Nach den Räumen 44, 46, 48 sind im Abluftkanal 82 Abluftklappen eingebracht, die aus Gründen der Übersichtlichkeit in der Fig. 1 und 2 nicht dargestellt sind. Auch diese werden in Abhängigkeit der Steuerparamter geregelt. Statt eines Abluftkanals 82 kann dieser teilweise oder vollständig durch eine Überströmöffnung mit oder ohne Klappe ersetzt werden. Die Klappe kann dabei ebenfalls von der Steuereinheit 110, insbesondere in Abhängigkeit der Steuerparameter geregelt werden.

Die Klimaanlage 2 nach der Erfindung kann in jedem Zuluftkanal 4, 6 eine variable Temperatur vorhalten, wobei die Mindestzulufttemperatur auf einen Mindestsollwert und/oder die maximale Zulufttemperatur auf einen Maximalsollwert eingestellt werden kann.

Der erste Zuluftkanal 4 und der zweite Zuluftkanal 6 können unterschiedlich große Querschnitte für unterschiedlich große Zuluftmengen und unterschiedlich leistungsfähige Kühl- und/oder Heizregister aufweisen.

Anwendungsbeispiel im Winter, d.h. es herrscht großen Heizbedarf:
In allen Räumen besteht Heizbedarf. Die Zuluft ist somit vorrangig ein Transportmedium für Wärmeenergie. Bei niedriger Luftbelastung kann ein hoher Umluftanteil verwendet werden. Z.B. handelt es sich um mehrere belegte Büroräume und um einen leeren Konferenzraum. Alle Räume werden vom ersten Zuluftkanal versorgt, der warme Zuluft führt. Die Klappen werden entsprechend eingestellt, um den hohen Umluftanteil zu gewährleisten. Der hohe Heizbedarf hat eine hohe zu fördernde Luftmenge zur Folge und somit hohe Drehzahlen des Zuluftventilators im ersten Zuluftkanal. Durch den hohen Umluftanteil kann der Energieinhalt der Abluft genutzt werden und die zusätzliche Heizleistung verringert werden.

Nun füllt sich der Konferenzraum; der Konferenzraum wird durch die Personen aufgeheizt und es ergibt sich eine verminderte Heizanforderung im Konferenzraum. Zudem sinkt die Luftqualität im Konferenzraum, wodurch die Anforderung an Frischluft steigt. Um dies zu erreichen, und um den unveränderten Anforderungen in den Büroräumen gerecht zu werden, wird nun der Konferenzraum vom zweiten Zuluftkanal versorgt, der kühlere Zuluft als der erste Zuluftkanal führt sowie einen höheren Frischluftanteil. Hierdurch ist eine individuellere Anpassung an die Anforderungen in den jeweiligen Räumen möglich und trotz zusätzlichem Zuluftventilator eine deutlichere Energieeinsparung t zu erzielen.

Anhand der Figuren wurde eine Zweikanal-Klimaanlage beschrieben. Selbstverständlich gilt die Erfindung auch für alle Mehrkanalanlagen.

Neben den beschriebenen Luftaufbereitungseinheiten können in der Mehrkanal-Klimaanlage auch weitere Luftaufbereitungseinheiten eingebracht sein, wie Aromatisierer, lonisierer etc.

Zudem können auch mehrere Abluftventilatoren in einem Abluftkanal und/oder mehreren Abluftkanäle vorgesehen sein.

### Bezugszeichenliste

- 2: Zweikanal-Klimaanlage
- 4: Zuluftkanal - oben
- 6: Zuluftkanal - unten
- 8: Zuluftventilator - oben
- 10: Zuluftventilator - unten
- 12: Heizregister - oben
- 14: Heizregister - unten
- 16: Temperaturfühler-oben
- 18: Temperaturfühler - unten
- 20: Bypasskanal
- 22: Bypassklappe
- 22a: Bypassklappenmotor
- 24: Frischluftkanal - oben
- 26: Frischluftkanal - unten
- 28: Umluftkanal für Zuluftkanal 4
- 30: Umluftkanal für Zuluftkanal 6
- 32: Kühlregister
- 34: Heizregister
- 36: Befeuchtungseinrichtung
- 38: Temperaturfühler
- 40: Feuchtigkeitsfühler
- 42: Druckfühler
- 44: zu klimatisierender Raum
- 46: zu klimatisierender Raum
- 48: zu klimatisierender Raum
- 50: Verzweigungskanal vom ersten Zuluftkanal
- 52: Lufteinlass in dem zu klimatisierenden Raum, Lufteinlassvorrichtung
- 54: Klappe im ersten Verzweigungskanal
- 56: Motor für die Klappe im ersten Verzweigungskanal
- 58: Kühlregister
- 60: Heizregister
- 62: Befeuchtungseinrichtung
- 64: Temperaturfühler
- 66: Feuchtigkeitsfühler
- 68: Druckfühler
- 70: zweiter Verzweigungskanal
- 72: Klappe im zweiten Verzweigungskanal
- 74: Motor für die Klappe im zweiten Verzweigungskanal
- 76: Temperaturfühler
- 78: Feuchtigkeitsfühler
- 80: Luftqualitätsfühler
- 82: Abluftkanal
- 84: Abluftventilator
- 86: Umluftkanal
- 88: Fortluftkanal
- 90: Fortluftklappe
- 92: Fortluftklappenmotor
- 94: Umluftklappe
- 96: Umluftklappenmotor
- 98: Umluftklappe
- 100: Umluftklappenmotor
- 102: Frischluftklappe
- 104: Frischluftklappenmotor
- 106: Frischluftklappe
- 108: Frischluftklappenmotor
- 110: Steuereinheit
- 112: Signalleitungen
- 114: Signalleitungen
- 116: Signalleitungen

## Patentansprüche

1. Mehrkanal-Klimaanlage (2) zur Klimatisierung einer Anzahl von Räumen (44, 46, 48) und/oder Raumzonen, mit jeweils mindestens einer Lufteinlassvorrichtung (52) zu jedem zu klimatisierenden Raum (44, 46, 48) oder jeder Raumzone, mit einem Zuluftventilator (8, 10), mit einer Steuereinheit (110), und mit mindestens zwei Zuluftkanälen (4, 6), wobei mindestens zwei Zuluftventilatoren (8, 10) vorgesehen sind, wobei in unterschiedlichen Zuluftkanälen (4, 6) jeweils mindestens ein Zuluftventilator (8, 10) angeordnet ist, **dadurch gekennzeichnet, dass** die mindestens zwei Zuluftkanäle (4, 6) über einen Bypasskanal (20) miteinander verbindbar sind, wobei in dem Bypasskanal (20) eine Bypassklappe (22, 22a) eingebracht ist.

2. Mehrkanal-Klimaanlage nach Anspruch 1, **dadurch gekennzeichnet, dass** in jedem Zuluftkanal (4, 6) mindestens ein Zuluftventilator (8, 10) eingebracht ist.

3. Mehrkanal-Klimaanlage nach Anspruch 1 oder 2, **dadurch gekennzeichnet, dass** mindestens ein Umluftkanal (28, 30, 86) und/oder mindestens ein Frischluftkanal (24, 26) vorgesehen ist und den Zuluftventilatoren (8, 10) Umluft und/oder Frischluft zugeführt wird.

4. Mehrkanal-Klimaanlage nach einem der vorangehenden Ansprüche, **dadurch gekennzeichnet, dass** die Steuereinheit (110) die Drehzahl aller Zuluftventilatoren (8, 10) steuert und somit die zu fördernde Luftmenge in den jeweiligen Zuluftkanälen (4, 6).

5. Mehrkanal-Klimaanlage nach einem der vorangehenden Ansprüche, **dadurch gekennzeichnet, dass** zumindest jeweils eine jedem Zuluftkanal (4, 6) zugeordnete Klappe (54, 72) vorgesehen ist, wobei durch die von der Steuereinrichtung (110) eingestellte Klappe (54, 72) die anteilige Zuluft aus den jeweiligen Zuluftkanälen (4, 6) zu dem zu klimatisierenden Raum (44, 46, 48) oder zu der Raumzone festgelegt ist.

6. Mehrkanal-Klimaanlage nach einem der vorangehenden Ansprüche, **dadurch gekennzeichnet, dass** jeder Zuluftventilator (8, 10) an einen Ansaugkanal angeschlossen ist, der mit einem Umluftkanal (28, 30) und/oder einem Frischluftkanal (24, 26) verbunden ist.

7. Mehrkanal-Klimaanlage nach Anspruch 6, **dadurch gekennzeichnet, dass** eines oder mehrere der folgenden Merkmale a) bis c) erfüllt ist bzw. sind:
a) in den Frischluftkanal (24, 26) ist zumindest eine Frischluftklappe (102, 106; 104, 108) eingebracht, insbesondere regelt die Steuereinheit (110) die Frischluftklappe (102, 106; 104, 108),
b) in den Umluftkanal (28, 30) ist eine Umluftklappe (94, 96; 98, 100) eingebracht, insbesondere regelt die Steuereinheit (110) die Umluftklappe (94, 96; 98, 100), um den Umluftanteil der Zuluft festzulegen,
c) ein Fortluftkanal (88) vorgesehen ist und eine Fortluftklappe ist (90, 92) in den Fortluftkanal (88) eingebracht ist, insbesondere regelt die Steuereinheit (110) die Fortluftklappe (90, 92), um den Fortluftanteil der Abluft festzulegen.

8. Mehrkanal-Klimaanlage nach einem der vorangehenden Ansprüche, **dadurch gekennzeichnet, dass** die Steuereinheit (110) mit Klimasensoren (64, 66, 68; 76, 78, 80) zusammenwirkt, die in den Räumen (44, 46, 48), den Raumzonen und/oder in den Zuluft/Abluftkanälen (4, 6, 82) eingebracht sind.

9. Mehrkanal-Klimaanlage nach Anspruch 8, **dadurch gekennzeichnet, dass** der Anteil der Umluft und/oder Frischluft an der Zuluft zum Zuluftventilator (8, 10) des jeweiligen Zuluftkanals (4, 6) in Abhängigkeit von zumindest einem Parameter aus der Gruppe der folgenden Parameter durch die Steuereinheit (110) festgelegt ist: Temperatur, Feuchte, Luftqualität, Dichte, Druck.

10. Mehrkanal-Klimaanlage nach einem der Ansprüche 8 oder 9, **dadurch gekennzeichnet, dass** die Steuereinheit (110) die Drehzahl der Zuluftventilatoren (8, 10) in Abhängigkeit der Anforderungen an Zuluft entsprechend den Zuluftanteilen, die auf Parametern der Klimasensoren basieren, zu den jeweiligen Räumen (44, 46, 48) oder Raumzonen regelt.

11. Mehrkanal-Klimaanlage nach Anspruch 1, **dadurch gekennzeichnet, dass** die Bypassklappe (22, 22a) mit der Steuereinheit (110) zusammenwirkt.

12. Verfahren zum Betreiben einer Mehrkanal-Klimaanlage nach einem der Ansprüche 8 bis 10, **dadurch gekennzeichnet, dass**
über die Klimasensoren (64, 66, 68; 76, 78, 80) der Istzustand in den jeweils zugeordneten Kompartimenten - z. B. Kanäle, Räume, Raumzonen etc. - erfasst und mit den in der Steuereinrichtung (110) hinterlegten Sollwerten verglichen und bewertet wird, woraus sich Steuerparameter ergeben,
in Abhängigkeit der Steuerparameter werden die Drehzahl der Zuluftventilatoren (8, 10) und die Klappenstellungen der den Zuluftkanälen (4, 6) jeweils zugeordneten Klappen (72, 74) von der Steuereinheit (110) festgelegt, wodurch sich die anteilsmäßige Zuordnung der Zuluftmenge aus den jeweiligen Zuluftkanälen (4, 6) zu den zu klimatisierenden Räumen oder zu den Raumzonen ergibt.

13. Verfahren nach Anspruch 12, **dadurch gekennzeichnet, dass** die Einstellung des Umluftanteils und/oder Frischluftanteils in Abhängigkeit der Steuerparameter erfolgt.

14. Verfahren nach Anspruch 12 oder 13, **dadurch gekennzeichnet, dass** die Aufbereitung der Luft nach physikalischen Kennwerten in Abhängigkeit der Steuerparameter erfolgt.

## Claims

1. Multi-duct air conditioning system (2) for air-conditioning a number of rooms (44, 46, 48) and/or room zones, each having at least one air inlet device (52) for each room (44, 46, 48) that is to be air-conditioned or each room zone, comprising a supply-air fan (8, 10), comprising a control unit (110), and comprising at least two supply-air ducts (4, 6),
wherein at least two supply-air fans (8, 10) are provided, wherein at least one supply-air fan (8, 10) is arranged in each different supply-air duct (4, 6),
**characterized in that** the at least two supply-air ducts (4, 6) can be connected to one another via a bypass duct (20), wherein a bypass damper (22, 22a) is introduced into the bypass duct (20).

2. Multi-duct air conditioning system according to Claim 1, **characterized in that** at least one supply-air fan (8, 10) is introduced into each supply-air duct (4, 6) .

3. Multi-duct air conditioning system according to Claim 1 or 2, **characterized in that** at least one recirculated-air duct (28, 30, 86) and/or at least one fresh-air duct (24, 26) is provided, and recirculated air and/or fresh air is supplied to the supply-air fans (8, 10) .

4. Multi-duct air conditioning system according to one of the preceding claims, **characterized in that** the control unit (110) controls the rotational speed of all the supply-air fans (8, 10), and thus the quantity of air to be delivered into the respective supply-air ducts (4, 6) .

5. Multi-duct air conditioning system according to one of the preceding claims, **characterized in that** at least one damper (54, 72) is respectively assigned to each supply-air duct (4, 6), wherein the proportion of supply air from the respective supply-air ducts (4, 6) to the room (44, 46, 48) to be air-conditioned or to the room zone is defined by the damper (54, 72) adjusted by the control device (110).

6. Multi-duct air conditioning system according to one of the preceding claims, **characterized in that** each supply-air fan (8, 10) is connected to an intake duct, which is connected to a recirculated-air duct (28, 30) and/or a fresh-air duct (24, 26).

7. Multi-duct air conditioning system according to Claim 6, **characterized in that** one or more of the following features a) to c) is or are satisfied:
a) at least one fresh-air damper (102, 106; 104, 108) is introduced into the fresh-air duct (24, 26), in particular the control unit (110) controls the fresh-air damper (102, 106; 104, 108),
b) a recirculated air-damper (94, 96; 98, 100) is introduced into the recirculated-air duct (28, 30), in particular the control unit (110) regulates the recirculated-air damper (94, 96; 98, 100) in order to define the recirculated-air proportion of the supply air,
c) an outgoing-air duct (88) is provided, and an outgoing-air damper (90, 92) is introduced into the outgoing-air duct (88), in particular the control unit (110) regulates the outgoing-air damper (90, 92) in order to define the outgoing-air proportion of the waste air.

8. Multi-duct air conditioning system according to one of the preceding claims, **characterized in that** the control unit (110) cooperates with air condition sensors (64, 66, 68; 76, 78, 80), which are introduced into the rooms (44, 46, 48), the room zones and/or into the supply-air/waste-air ducts (4, 6, 82).

9. Multi-duct air conditioning system according to Claim 8, **characterized in that** the proportion of the recirculated air and/or fresh air in the supply air to the supply-air fan (8, 10) of the respective supply-air duct (4, 6) is defined by the control unit (110) as a function of at least one parameter from the group of the following parameters: temperature, humidity, air quality, density, pressure.

10. Multi-duct air conditioning system according to either of Claims 8 and 9, **characterized in that** the control unit (110) regulates the rotational speed of the supply-air fans (8, 10) as a function of the requirements for supply air corresponding to the supply-air proportions, which are based on parameters from the air condition sensors, to the respective rooms (44, 46, 48) or room zones.

11. Multi-duct air conditioning system according to Claim 1, **characterized in that** the bypass damper (22, 22a) cooperates with the control unit (110).

12. Method for operating a multi-duct air conditioning system according to one of Claims 8 to 10, **characterized in that**
the current state in the respective associated compartments - e.g. ducts, rooms, room zones, etc. - is detected via the air condition sensors (64, 66, 68; 76, 78, 80) and is compared with the target values stored in the control device (110) and evaluated, resulting in control parameters,
as a function of the control parameters, the rotational speed of the supply-air fans (8, 10) and the damper positions of the dampers (72, 74) respectively assigned to the supply-air ducts (4, 6) are defined by the control unit (110), which results in the proportional assignment of the quantity of supply air from the respective supply-air ducts (4, 6) to the rooms to be air-conditioned or to the room zones.

13. Method according to Claim 12, **characterized in that** the proportion of recirculated air and/or the proportion of fresh air is adjusted as a function of the control parameters.

14. Method according to Claim 12 or 13, **characterized in that** the air is conditioned in terms of its physical characteristic values as a function of the control parameters.

## Revendications

1. Système de climatisation multicanaux (2) destiné à climatiser un certain nombre de pièces (44, 46, 48) et/ou de zones de pièce, comprenant respectivement au moins un arrangement d'admission d'air (52) vers chaque pièce (44, 46, 48) à climatiser ou chaque zone de pièce, comprenant un ventilateur d'amenée d'air (8, 10), comprenant une unité de commande (110) et comprenant au moins deux canaux d'amenée d'air (4, 6), au moins deux ventilateurs d'amenée d'air (8, 10) étant présents, au moins un ventilateur d'amenée d'air (8, 10) étant respectivement disposé dans des canaux d'amenée d'air (4, 6) différents, **caractérisé en ce que** les au moins deux canaux d'amenée d'air (4, 6) peuvent être reliés ensemble par le biais d'un canal de dérivation (20), un clapet de dérivation (22, 22a) étant incorporé dans le canal de dérivation (20).

2. Système de climatisation multicanaux selon la revendication 1, **caractérisé en ce qu'**au moins un ventilateur d'amenée d'air (8, 10) est incorporé dans chaque canal d'amenée d'air (4, 6).

3. Système de climatisation multicanaux selon la revendication 1 ou 2, **caractérisé en ce qu'**au moins un canal de reprise d'air (28, 30, 86) et/ou au moins un canal à air frais (24, 26) est présent et de l'air ambiant et/ou de l'air frais est acheminé aux ventilateurs d'amenée d'air (8, 10).

4. Système de climatisation multicanaux selon l'une des revendications précédentes, **caractérisé en ce que** l'unité de commande (110) commande la vitesse de rotation de tous les ventilateurs d'amenée d'air (8, 10) et ainsi la quantité d'air à transporter dans les canaux d'amenée d'air (4, 6) respectifs.

5. Système de climatisation multicanaux selon l'une des revendications précédentes, **caractérisé en ce qu'**au moins un clapet (54, 72) respectivement associé à chaque canal d'amenée d'air (4, 6) est présent, l'amenée d'air proportionnelle depuis les canaux d'amenée d'air (4, 6) respectifs vers la pièce (44, 46, 48) à climatiser ou vers la zone de pièce étant fixée par le clapet (54, 72) réglé par le dispositif de commande (110).

6. Système de climatisation multicanaux selon l'une des revendications précédentes, **caractérisé en ce que** chaque ventilateur d'amenée d'air (8, 10) est raccordé à un canal d'aspiration qui est relié à un canal de reprise d'air (28, 30) et/ou à un canal à air frais (24, 26) .

7. Système de climatisation multicanaux selon la revendication 6, **caractérisé en ce qu'**une ou plusieurs des caractéristiques suivantes a) à c) est ou sont satisfaite(s) :
a) au moins un clapet à air frais (102, 106 ; 104, 108) est incorporé dans le canal à air frais (24, 26), l'unité de commande (110) régule notamment le clapet à air frais (102, 106 ; 104, 108),
b) un clapet de reprise d'air (94, 96 ; 98, 100) est incorporé dans le canal de reprise d'air (28, 30), l'unité de commande (110) régule notamment le clapet de reprise d'air (94, 96 ; 98, 100) afin de fixer la part de reprise d'air dans l'amenée d'air,
c) un canal à air vicié (88) est présent et un clapet à air vicié (90, 92) est incorporé dans le canal à air vicié (88), l'unité de commande (110) régule notamment le clapet à air vicié (90, 92) afin de fixer la part d'air vicié dans l'air évacué.

8. Système de climatisation multicanaux selon l'une des revendications précédentes, **caractérisé en ce que** l'unité de commande (110) coopère avec des capteurs de climatisation (64, 66, 68; 76, 78, 80) qui sont incorporés dans les pièces (44, 46, 48), dans les zones de pièce et/ou dans les canaux d'amenée d'air / d'évacuation d'air (4, 6, 82).

9. Système de climatisation multicanaux selon la revendication 8, **caractérisé en ce que** la part d'air de reprise et/ou d'air frais dans l'amenée d'air vers le ventilateur d'amenée d'air (8, 10) du canal d'amenée d'air (4, 6) respectif est fixée par l'unité de commande (110) en fonction d'au moins un paramètre du groupe des paramètres suivants : température, humidité, qualité de l'air, densité, pression.

10. Système de climatisation multicanaux selon l'une des revendications 8 et 9, **caractérisé en ce que** l'unité de commande (110) régule la vitesse de rotation des ventilateurs d'amenée d'air (8, 10) vers les pièces (44, 46, 48) ou les zones de pièce respectives en fonction des exigences en matière d'amenée d'air conformément aux parts d'air amené, lesquelles se basent sur les paramètres des capteurs de climatisation.

11. Système de climatisation multicanaux selon la revendication 1, **caractérisé en ce que** le clapet de dérivation (22, 22a) coopère avec l'unité de commande (110) .

12. Procédé pour faire fonctionner un système de climatisation multicanaux selon l'une des revendications 8 à 10, **caractérisé en ce que**
l'état réel dans les compartiments respectivement associés - par exemple canaux, pièces, zones de pièce, etc. - est détecté par le biais des capteurs de climatisation (64, 66, 68 ; 76, 78, 80) et est comparé avec les valeurs de consigne stockées dans le dispositif de commande (110) puis évalué, ce qui résulte en des paramètres de commande,
la vitesse de rotation des ventilateurs d'amenée d'air (8, 10) et les positions de clapet des clapets (72, 74) respectivement associés aux canaux d'amenée d'air (4, 6) sont fixées par l'unité de commande (110) en fonction des paramètres de commande, ce qui permet d'obtenir l'affectation proportionnelle de la quantité d'air amené depuis les canaux d'amenée d'air (4, 6) respectifs vers les pièces à climatiser ou vers les zones de pièce.

13. Procédé selon la revendication 12, **caractérisé en ce que** le réglage de la part d'air de reprise et/ou de la part d'air frais est effectué en fonction des paramètres de commande.

14. Procédé selon la revendication 12 ou 13, **caractérisé en ce que** la préparation de l'air est effectuée d'après les caractéristiques physiques en fonction des paramètres de commande.
